# EUROPEAN PATENT APPLICATION

(11) **EP 4 597 035 A1**
(43) Date of publication of application: **06.08.2025**
(21) Application number: 23872227.6
(22) Date of filing: 25.09.2023
(51) Int. Cl.: G01C 15/00

(54) **SURVEYING DEVICE**

(30) Priority: 29.09.2022 JP 2022156076
(71) Applicant: TOPCON CORPORATION, Tokyo 174-8580 (JP)
(72) Inventor: OHTOMO Fumio, Asaka-shi, Saitama 351-0035 (JP); OSARAGI Kazuki, Tokyo 174-8580 (JP); KUMAGAI Kaoru, Tokyo 174-8580 (JP); SHOJI Naoki, Tokyo 174-8580 (JP)
(74) Representative: Louis Pöhlau Lohrentz
(86) International application number: PCT/JP2023/034634
(87) International publication number: WO 2024/071002

(57) **Abstract**

A surveying instrument includes a distance measuring module (2) configured to project a distance measuring light (21) and to receive a reflected distance measuring light (22) from an object and to perform a distance measurement, an optical axis deflector (9) disposed on a reference optical axis of the distance measuring module and configured to deflect the distance measuring light, an optical axis deflection motor driver (8) configured to drive the optical axis deflector, an attitude detector (6), a measuring direction detector (7) configured to detect a projection direction with respect to the reference optical axis of the distance measuring light, a storage module (5), and an arithmetic control module (4) configured to synchronously control the distance measuring module, the attitude detector, and the optical axis deflector, wherein the optical axis deflector includes a pair of disk prisms (17, 18) composed of optical prisms, and the arithmetic control module is configured to drive the optical axis deflector via the optical axis deflection motor driver and to scan the distance measuring light in a predetermined scan pattern and to reversely rotate one of the disk prisms with respect to the other so as to suppress generation of Coriolis force.

## Description

### TECHNICAL FIELD

The present invention relates to a surveying instrument which scans a distance measuring light and acquires point cloud data.

### BACKGROUND ART

Generally, a surveying instrument (laser scanner) for acquiring point cloud data has a continuously rotating part for scanning a distance measuring light and is large and heavy, and therefore is mounted on a supporting device having rigidity, such as a tripod.

Meanwhile, as laser scanners have become more widespread, reduction in size and weight is achieved, and smaller and lighter laser scanners capable of acquiring point cloud data in a state where a worker has carried (handheld state) have been put to practical use.

Further, one type of laser scanners for acquiring point cloud data is configured to relatively rotate a pair of prisms and to scan a distance measuring light through a mutual deflection action of the two prisms. Such a laser scanner is reducible in size and weight and is capable of performing a measurement in a handheld state.

The laser scanner performs scanning a distance measuring light by continuously rotating prisms. Coriolis force is generated as prisms rotate, and there is a possibility that this Coriolis force affects a supporting attitude of the laser scanner in an unstable support such as a handheld state and affects stability of measurement.

### PRIOR ART REFERENCES

### PATENT DOCUMENT

Patent Document 1: Patent Publication JP-B2-6541365
Patent Document 2: Patent Publication JP-A-2016-151423
Patent Document 3: Patent Publication JP-A-2017-090244
Patent Document 4: Patent Publication JP-A-2017-106813
Patent Document 5: Patent Publication JP-A-2018-028464

### SUMMARY OF THE INVENTION

### PROBLEM TO BE SOLVED BY THE INVENTION

An object of the present invention is to suppress generation of Coriolis force generated during execution of a scan of a surveying instrument including a scanning module for a distance measuring light has a rotating body, to stabilize an attitude of the surveying instrument, and to achieve a stable measurement.

### MEANS FOR SOLVING THE PROBLEM

The present invention relates to a surveying instrument comprising a distance measuring module configured to project a distance measuring light on a distance measuring optical axis and to receive a reflected distance measuring light from an object and to perform a distance measurement, an optical axis deflector disposed on a reference optical axis of the distance measuring module and configured to deflect the distance measuring light with respect to the reference optical axis, an optical axis deflection motor driver configured to drive the optical axis deflector, an attitude detector, a measuring direction detector configured to detect a projection direction with respect to the reference optical axis of the distance measuring light, a storage module, and an arithmetic control module configured to control deflection of the distance measuring optical axis via the optical axis deflector, to perform a distance measurement by the distance measuring module and to synchronously control the distance measuring module, the attitude detector, and the optical axis deflector, wherein the optical axis deflector includes a pair of disk prisms composed of optical prisms and is configured to deflect the distance measuring optical axis by an individual rotation and a relative rotation of the pair of disk prisms, and the arithmetic control module is configured to drive the optical axis deflector via the optical axis deflection motor driver and to scan the distance measuring light in a predetermined scan pattern and to reversely rotate one of the disk prisms with respect to the other so as to suppress generation of Coriolis force.

Further, the present invention relates to a surveying instrument, wherein the arithmetic control module is configured to control driving of the optical axis deflector such that a product of a mass and an angular velocity of one disk prism is equal to or approximately equal to a product of a mass and an angular velocity of the other disk prism of the pair of disk prisms.

Further, the present invention relates to a surveying instrument, wherein the arithmetic control module is configured to control driving of the optical axis deflector such that a ratio of products of respective masses and respective rotation speeds of the respective two disk prisms is within a range of 0.7 to 1.5.

Further, the present invention relates to a surveying instrument further comprising the attitude detector configured to detect an attitude of the surveying instrument, wherein the arithmetic control module is configured to acquire three-dimensional point cloud data in a scan pattern of a horizontal reference based on a detection result of the attitude detector, a distance measurement result of the distance measuring module, and a detection result of the measuring direction detector.

Furthermore, the present invention relates to a surveying instrument further comprising the attitude detector configured to detect an attitude of the surveying instrument, wherein the arithmetic control module is configured to acquire a three-dimensional measurement data of a horizontal reference of an object based on a detection result of the attitude detector, a distance measurement result of the distance measuring module, and a detection result of the measuring direction detector.

### EFFECTS OF THE INVENTION

According to the present invention, a surveying instrument comprises a distance measuring module configured to project a distance measuring light on a distance measuring optical axis and to receive a reflected distance measuring light from an object and to perform a distance measurement, an optical axis deflector disposed on a reference optical axis of the distance measuring module and configured to deflect the distance measuring light with respect to the reference optical axis, an optical axis deflection motor driver configured to drive the optical axis deflector, an attitude detector, a measuring direction detector configured to detect a projection direction with respect to the reference optical axis of the distance measuring light, a storage module, and an arithmetic control module configured to control deflection of the distance measuring optical axis via the optical axis deflector, to perform a distance measurement by the distance measuring module and to synchronously control the distance measuring module, the attitude detector, and the optical axis deflector, wherein the optical axis deflector includes a pair of disk prisms composed of optical prisms and is configured to deflect the distance measuring optical axis by an individual rotation and a relative rotation of the pair of disk prisms, and the arithmetic control module is configured to drive the optical axis deflector via the optical axis deflection motor driver and to scan the distance measuring light in a predetermined scan pattern and to reversely rotate one of the disk prisms with respect to the other so as to suppress generation of Coriolis force. As a result, it is possible to suppress generation of Coriolis force, to stabilize an attitude of the surveying instrument, and to achieve a stable measurement.

### BRIEF DESCRIPTION OF DRAWINGS

FIG.1 is a schematical block diagram of a surveying instrument according to an embodiment of the present invention.
FIG.2A and FIG.2B are explanatory diagrams showing a relationship between an action of an optical axis deflector and a scan pattern in the surveying instrument.
FIG.3 is an explanatory diagram showing an example of the scan pattern in the surveying instrument.
FIG.4A is a drawing showing a relationship between the scan pattern and horizontality with respect to an image in a measuring direction, FIG.4B is a drawing showing a state where the scan pattern is corrected to as a horizontal reference, and FIG.4C is a drawing showing images and scan patterns in a measuring direction in time series when the surveying instrument moves.
FIG.5A is a drawing showing a portion where measured distance values are equal to one another when an object is scanned, and FIG.5B is a drawing in which portions where measured distance values are equal to one another are extracted and a drawing showing a relationship between a previous scan and a current scan when a surveying instrument moves.

### MODE(S) FOR CARRYING OUT THE INVENTION

A description will be given below on an embodiment of the present invention by referring to the attached drawings.

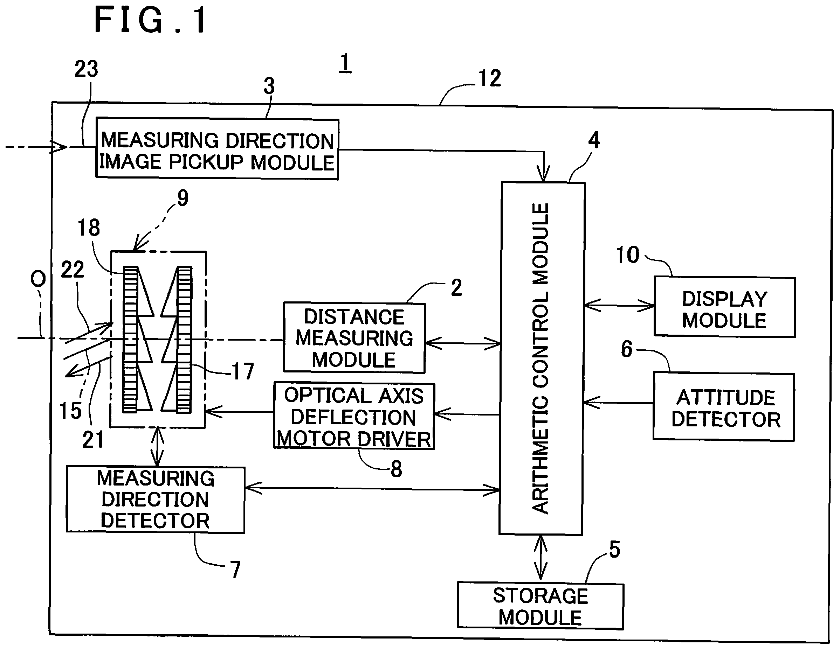

FIG.1 shows a surveying instrument 1 to which the present embodiment is applied, and the surveying instrument 1 has a function as a laser scanner.

The surveying instrument 1 is portable, and is capable of being supported in a handheld manner or of being supported by a monopod. Further, the surveying instrument 1 is also capable of being mounted on a mobile vehicle, a flight vehicle, etc.

The surveying instrument 1 mainly includes a distance measuring module 2, a measuring direction image pickup module 3, an arithmetic control module 4, a storage module 5, an attitude detector 6, a measuring direction detector 7, an optical axis deflection motor driver 8, an optical axis deflector 9, and a display module 10. These components are accommodated and integrated in a casing 12.

The distance measuring module 2 projects a distance measuring light 21 on a distance measuring optical axis 15, receives a reflected light from an object, and performs a distance measurement based on a reciprocating time of the distance measuring light 21. The measuring direction image pickup module 3 acquires an image in a projection direction (measuring direction) of the distance measuring light 21.

As the arithmetic control module 4, a CPU specialized for the present embodiment, a general-purpose CPU, a built-in CPU, etc. is used, and a time measuring means is built in the arithmetic control module 4. Further, a semiconductor memory, etc. is used as the storage module 5.

The arithmetic control module 4 controls the optical axis deflector 9 via the optical axis deflection motor driver 8. Further, the arithmetic control module 4 controls a deflection of the distance measuring optical axis 15 via the optical axis deflector 9, performs a distance measurement by the distance measuring module 2, and further synchronously controls the distance measuring module 2, the measuring direction image pickup module 3, the attitude detector 6, and the optical axis deflector 9, etc.

In the storage module 5, various types of programs for performing the present embodiment are stored. These programs include a distance measuring program, an image processing program, an optical axis deflection control program, a calculation program for calculating a driving condition of the optical axis deflector 9 for reducing Coriolis force, a program for controlling the optical axis deflection motor driver 8, a data processing program, and other programs. The arithmetic control module 4 develops and performs the stored programs. Further, in the storage module 5, various types of data, for instance, a measurement data and an image data are stored.

The attitude detector 6 detects in real time an attitude of the surveying instrument 1, that is, a tilt angle, a tilt direction, a horizontal rotation angle of the surveying instrument 1 with respect to horizontal or vertical. Alternatively, the attitude detector 6 detects in real time a tilt angle, a tilt direction, and a horizontal rotation angle of a reference optical axis O (to be described later) with respect to horizontal or vertical. A detection result by the attitude detector 6 is output to the arithmetic control module 4.

Here, as the attitude detector 6, it is possible to use an attitude detector disclosed in Patent Document 1. Alternatively, it is also possible to use an inertial sensor composed of an acceleration sensor or a gyro sensor.

The optical axis deflector 9 is arranged on the distance measuring optical axis 15. A straight optical axis transmitting through a center of the optical axis deflector 9 is a reference optical axis O. The reference optical axis O coincides with the distance measuring optical axis 15 of when it is not deflected by the optical axis deflector 9, and has a predetermined relationship with respect to the casing 12.

It is to be noted that, as the optical axis deflector 9, it is possible to use those disclosed in Patent Document 2, Patent Document 3, and Patent Document 4.

The optical axis deflector 9 includes a pair of disk prisms 17 and 18 composed of optical prisms. The disk prisms 17 and 18 are disk-shaped (or polygonal circumscribing a circle), each having a mass and a diameter suitable for their respective uses, and are disposed orthogonally and concentrically with respect to the distance measuring optical axis 15 on the distance measuring optical axis 15, in parallel to each other at a predetermined interval.

The disk prisms 17 and 18 are each provided rotatable (coaxially rotatable) around the reference optical axis O. Each disk prism 17 and 18 is configured to be individually and independently rotated by a motor. The motor is driven by the optical axis deflection motor driver 8.

A distance measuring light 21 transmitting through the optical axis deflector 9, that is, a distance measuring light 21 transmitting through the disk prisms 17 and 18, is deflected by an optical function of the disk prisms 17 and 18, and is further deflected in an arbitrary direction by a rotation and a relative rotation of the disk prisms 17 and 18.

A deflection and a scanning of the distance measuring light 21 are performed by driving the optical axis deflector 9 by the optical axis deflection motor driver 8.

Further, the measuring direction detector 7 has an angle detector such as an encoder, and detects a rotation angle and a rotating direction of the disk prisms 17 and 18 based on a signal from the angle detector, and detects a measuring direction, that is, a projection direction of the distance measuring light 21, and these detection results are input to the arithmetic control module 4. The arithmetic control module 4 is configured to control a rotation angle, a rotating direction, a rotating speed, a rotation ratio, etc. of the disk prisms 17 and 18 via the optical axis deflection motor driver 8 based on detection results from the measuring direction detector 7.

Control of rotations of the disk prisms 17 and 18 is made it possible to deflect the distance measuring optical axis (that is, the distance measuring light 21) 15 to any angles from 0° to a maximum deflection angle (for instance, ±30°) with reference to the reference optical axis O. Further, by individual control of the disk prisms 17 and 18, it is possible for the arithmetic control module 4 to scan the distance measuring light 21 in any patterns and to perform a distance measurement in any scan patterns.

Further, the arithmetic control module 4 performs a relative rotation and an integral rotation of the disk prisms 17 and 18 while irradiating with the distance measuring light 21, and enables the distance measuring light 21 to be scanned in an arbitrary direction and in any scan pattern.

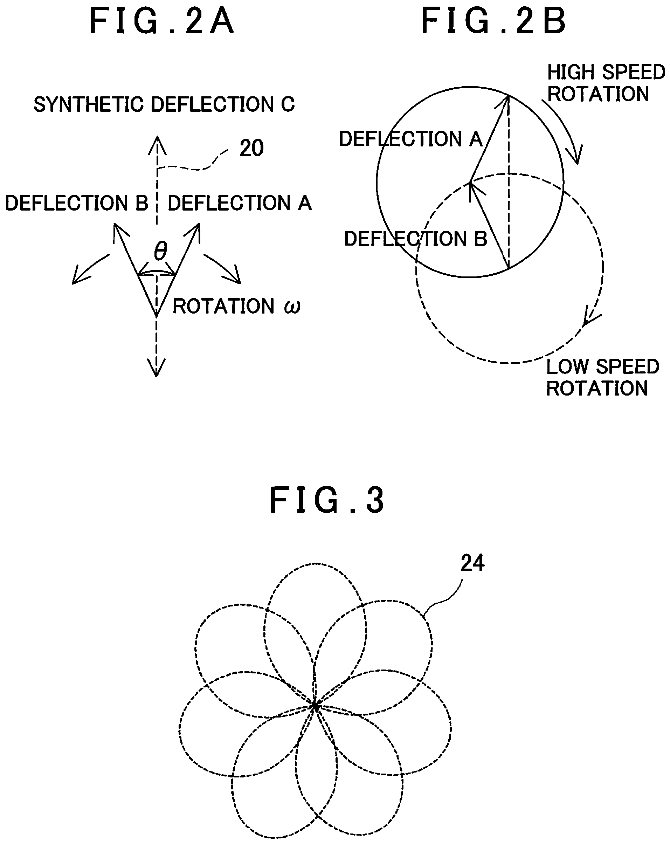

For instance, as shown in FIG.2A, when a relative rotation angle between the disk prisms 17 and 18 is θ, and deflection A and deflection B are deflections respectively caused by the disk prisms 17 and 18, an actual locus 20 becomes a synthetic deflection C, and further a magnitude of a deflection angle is determined according to the relative rotation angle θ. Therefore, when the disk prisms 17 and 18 are rotated forward and backward synchronously at a constant speed, the distance measuring optical axis 15 (the distance measuring light 21) is scanned linearly back and forth in a direction of the synthetic deflection C, and a scan pattern becomes linear. Further, the arithmetic control module 4 is capable of changing a rotation timing (rotation phase) of the disk prisms 17 and 18 via the optical axis deflection motor driver 8 and of rotating the linear scan pattern. Accordingly, a full deflection range around the reference optical axis O is scanned with a linear scan pattern, and it is possible to acquire point cloud data.

Further, in a state where a positional relationship between the disk prism 17 and the disk prism 18 is fixed (in a state where a deflection angle formed by the disk prism 17 and the disk prism 18 is fixed), when the optical axis deflection motor driver 8 integrally rotates the disk prism 17 and the disk prism 18, the distance measuring optical axis 15 (the distance measuring light 21) is scanned in a circle around the reference optical axis O (see FIG.1).

Further, as shown in FIG.2B, when the arithmetic control module 4 rotates the disk prism 18 at a rotating speed slower than a rotating speed of the disk prism 17, the distance measuring light 21 is rotated while an angular difference θ gradually increases. Therefore, a scan locus of the distance measuring light 21 becomes spiral-shaped.

Further, by controlling a rotating direction, a rotating speed, and a rotating speed ratio SR of each of the disk prism 17 and the disk prism 18 by the arithmetic control module 4, a scan locus of the distance measuring light 21 is obtained as various two-dimensional scan patterns around the reference optical axis O.

Further, by rotating the one disk prism 17 of the disk prism 17 and the disk prism 18 by 25 revolutions and rotating the other disk prism 18 by 5 revolutions in an opposite direction (rotation ratio 5/25) by the arithmetic control module 4, a flower petal-shaped two-dimensional closed loop scan pattern 24 (hypotrochoid curve) as shown in FIG.3 is obtained.

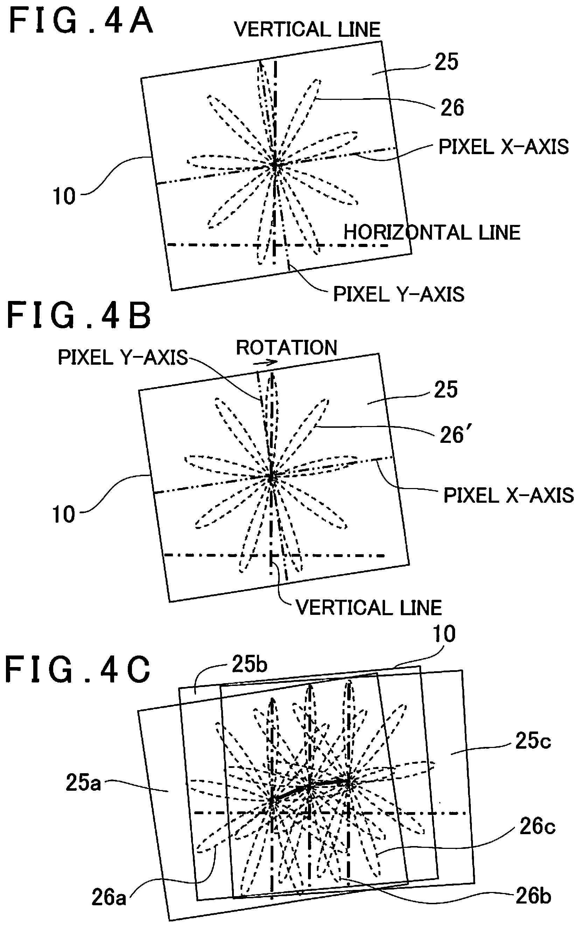

Further, by rotating the disk prism 17 and the disk prism 18 in opposite directions by the arithmetic control module 4, and making a rotation ratio approximately one to one, a two-dimensional closed-loop scan pattern 24 as shown in FIG.4 is obtained.

The distance measuring module 2 has a function as an electronic distance meter, projects a distance measuring light 21 to a measuring point or an object along the distance measuring optical axis 15, receives a reflected distance measuring light 22 from the measuring point or the object, and performs electronic distance measurement based on a reciprocating time (flight time) of the distance measuring light 21. A distance measurement result of the distance measuring module 2 is input to the arithmetic control module 4.

The arithmetic control module 4 performs control to continuously rotate the disk prisms 17 and 18 at a predetermined rotation ratio, while continuously irradiating with the distance measuring light 21, and it is possible to scan the distance measuring light 21 in a two-dimensional pattern. Further, the arithmetic control module 4 is capable of acquiring point cloud data along a scan locus by pulse-emitting the distance measuring light 21 and performing a distance measurement for each pulsed light.

Here, when a measurement by the surveying instrument 1 involves movement of the surveying instrument 1 itself, the movement of the surveying instrument 1 generates Coriolis forces in the continuously rotating disk prisms 17 and 18.

Therefore, when the surveying instrument 1 is used in an unstable supporting state, such as, when the surveying instrument 1 is held by hand or supported by a monopod, or when the surveying instrument 1 is mounted in a mobile vehicle, a flight vehicle, instability to measurement is caused by generating Coriolis force.

Therefore, in the present embodiment, the arithmetic control module 4 controls the optical axis deflector 9 to suppress generation of Coriolis force.

Generally, Coriolis force of a rotating body is expressed as a product of a mass and a rotation speed (mass × rotation speed) (or a product of a mass and an angular velocity (mass × angular velocity)) of the rotating body. Therefore, the arithmetic control module 4 controls rotations of the disk prisms 17 and 18 such that Coriolis forces respectively generated by rotations of the disk prism 17 and the disk prism 18 are offset.

The arithmetic control module 4 sets a mass and a rotation speed of each disk prism 17 and 18 and reversely rotates the disk prisms 17 and 18 such that a product of a mass and a rotation speed (mass × rotation speed) (or a product of a mass and an angular velocity (mass × angular velocity)) of the disk prism 17 and a product of a mass and a rotation speed (mass × rotation speed) (or a product of a mass and an angular velocity (mass × angular velocity)) of the disk prism 18 are approximately equal to each other, that is, an inertial force ratio is within a range of (0.7 to 1.5).

In the arithmetic control module 4, masses of the disk prisms 17 and 18 are previously set and input, and by setting conditions for acquiring point cloud data (scan conditions), such as point cloud density, the arithmetic control module 4 calculates scan patterns and rotating speeds of the disk prisms 17 and 18 such that the inertial force ratio of the disk prisms 17 and 18 is within a range of (0.7 to 1.5), and rotates the disk prism 17 at the calculated rotating speed, and reversely rotates the disk prism 18 at the calculated rotating speed.

By this control, it is possible to offset Coriolis force generated during rotation of the disk prism 17 and Coriolis force generated during rotation of the disk prism 18, and it is possible to perform a measurement in a state of suppressing Coriolis force generated during rotations of the disk prisms 17 and 18 in the optical axis deflector 9.

The measuring direction detector 7 detects a rotation angle of each of the disk prisms 17 and 18, and detects a measuring direction of the distance measuring optical axis 15 (projection direction of the distance measuring light 21), that is, a deflection angle and a deflecting direction of the distance measuring optical axis 15 with respect to the reference optical axis O in real time. Therefore, an angle and a direction of the distance measuring optical axis 15 with respect to the reference optical axis O at each measurement point during scanning can be detected (angle measurement) in real time.

A measuring direction detection result (an angle measurement result with respect to the reference optical axis O) of the measuring direction detector 7 is associated with a distance measurement result and is input into the arithmetic control module 4, and the arithmetic control module 4 associates and stores the distance measurement result, the angle measurement result, and a detection result of the attitude detector 6 in the storage module 5.

The measuring direction image pickup module 3 has a known relationship with the reference optical axis O, that is, an image pickup optical axis 23 of the measuring direction image pickup module 3 is parallel to the reference optical axis O and a distance between optical axes is known. Further, the measuring direction image pickup module 3 is a camera having a field angle larger than a maximum deflection angle (for instance, ±30°) of the optical axis deflector 9 and acquires image data including a maximum deflection range by the optical axis deflector 9. Further, the measuring direction image pickup module 3 is capable of acquiring a moving image or continuous image. Image data acquired by the measuring direction image pickup module 3 are input into the arithmetic control module 4.

A pixel of the measuring direction image pickup module 3 is a CCD, which is an aggregation of pixels, or a CMOS sensor, and a position of each pixel on an image element is able to be identified. For instance, the pixel has an orthogonal coordinate system having the image pickup optical axis 23 as an origin, and a position of each the pixel is identified by a pixel coordinate in the orthogonal coordinate system. Further, a pixel coordinate is converted into an angle coordinate in a relationship with the field angle (pixel position × field angle / number of vertical and horizontal pixels corresponding to a field angle) and is associated with a measuring direction detection results of the measuring direction detector 7. It is to be noted that one axis (for instance, pixel y-axis) of the orthogonal coordinate system is set to coincide with vertical when the measuring direction image pickup module 3 is in a state of a horizontal attitude, and another orthogonal axis (for instance, pixel x-axis) is set to coincide with horizontal.

The arithmetic control module 4 obtains an inclination angle (vertical angle) and a horizontal rotation angle with respect to horizontal of the reference optical axis O and the image pickup optical axis 23, based on a detection result of the attitude detector 6. As a result, it is also possible to obtain horizontal reference three-dimensional coordinates of each measuring point of the point cloud data along the scan locus, and is also possible to associate the three-dimensional coordinates of the point cloud data with the pixel coordinates.

Therefore, even when the surveying instrument 1 is used in an unstable supporting state (for instance, hand-held supporting state), it is possible to suppress generation of Coriolis force, and even when the surveying instrument 1 is not horizontally supported (even when it is not leveled), it is possible to acquire horizontal reference three-dimensional measurement data in a state of a stable measurement.

The display module 10 displays an image acquired by the measuring direction image pickup module 3, the scan locus, a measurement state, a measurement result, etc. It is to be noted that the display module 10 may be used as a touch panel that also serves as an operation module.

FIG.4A, FIG.4B, and FIG.4C each show an image 25 displayed on the display module 10, and the image 25 is a synthesized image of an image acquired by the measuring direction image pickup module 3 and a scan locus (scan pattern 26). In the image 25, a pixel x-axis and a pixel y-axis of a pixel are displayed as required, and also a vertical line and a horizontal line obtained from a detection result of the attitude detector 6 are shown.

FIG.4A shows that a pixel y-axis is rotated on a left with respect to a vertical line, and the image 25 is acquired in a state where the surveying instrument 1 is tilted to a left with respect to vertical (or horizontal).

A tilt angle of the surveying instrument 1 with respect to vertical (or horizontal) is detected by the attitude detector 6.

An attitude (orientation) of the scan pattern 26 shown in FIG.4A is coincident with a pixel x-axis and a pixel y-axis of a pixel.

Therefore, the scan pattern 26 is rotated on a left with respect to the vertical line (or horizontal line).

The arithmetic control module 4 is capable of rotating a scan pattern and changing an orientation of a scan pattern 26 by changing a rotation timing (rotation phase) of the disk prisms 17 and 18 via the optical axis deflection motor driver 8.

FIG.4B shows a state where the arithmetic control module 4 obtains a tilt (rotation) relationship between the pixel y-axis and a vertical line, rotates rightward the scan pattern 26, and controls an orientation of a scan pattern 26' such that an orientation (posture) of the scan pattern 26 coincides with a vertical line.

FIG.4C shows superimposed images 25a, 25b, and 25c acquired in time series during movement of the surveying instrument 1, and shows scan patterns 26a, 26b, and 26c obtained by performing a scan synchronized with the image acquisition.

FIG.4C shows that, by acquiring a detection result of the attitude detector 6 when acquiring the images 25a, 25b, and 25c in real time, and correcting a direction of a scan pattern 26 performed when acquiring the images 25a, 25b, and 25c based on the detection result, a scan always with reference to a vertical line is performed, and the scan pattern 26 in a direction coincident with a vertical line is obtained.

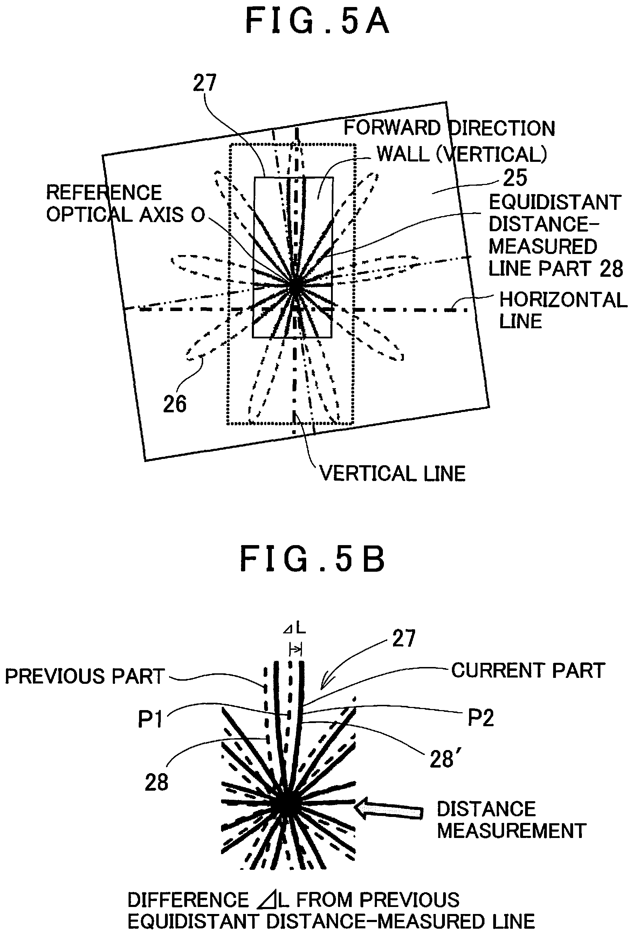

FIG.5 shows an example of calculating a moving position by the surveying instrument 1 mounted in a mobile vehicle (not shown) .

The arithmetic control module 4, as shown in FIG.5A, repeats scans at a predetermined time interval (Ts) while a reference optical axis O of the distance measuring optical axis is directed to a forward direction, and extracts a distance measured part 27 which becomes a substantially equal distance in one scan (scanning locus part of which a distance measuring distance is equal in scan parts, such as a vertically wall in FIG.5A (equidistant distance-measured line part 28)).

Next, the arithmetic control module 4, as shown in FIG.5B, with regard to the distance measured part 27, calculates a difference (ΔL) between a previous equidistant distance-measured line part 28 repeatedly subjected to distance measurement, and a current equidistant distance-measured line part 28', and obtains a movement speed (ΔL/Ts) of the surveying instrument based on the difference (ΔL) and the time interval (Ts).

All differences in positions between any measuring points in the previous equidistant distance-measured line part 28 and measuring points (that is, points of which deflecting directions detected respectively by the measuring direction detector 7 in the equidistant distance-measured line part 28 and the equidistant distance-measured line part 28' are the same) corresponding to the any measuring points in the current equidistant distance-measured line part 28' are substantially the same ΔL, and with regard to a measuring point in the equidistant distance-measured line part 28, movement speeds (ΔL/Ts) are substantially the same. Therefore, by determining (ΔL/Ts) with regard to all measuring points in the equidistant distance-measured line part 28 or a predetermined number of measuring points and by averaging movement speed, it is possible to improve accuracy and reliability.

Further, by determining a vertical angle and a horizontal angle at any time based on an output of the attitude detector **6,** the arithmetic control module 4 is capable of determining a moving position.

It is to be noted that a correspondence relationship of scan locus accompanying movement is obtained by determining a previous scan position and a current scan position respectively based on detection results of the attitude detector 6 and by comparing between a previous scan position and a current scan position. It is to be noted that the acquired image may be used together when determining a correspondence relationship of scan locus accompanying movement.

Although a tilt with respect to horizontal and a horizontal rotation angle are obtained from a detection result of the attitude detector 6 and a distance is acquired from a distance measurement result of the distance measuring module 2 in the embodiment of the surveying instrument 1 described above, with regard to positional information of the surveying instrument 1, a GNSS may be provided in the surveying instrument 1, and positional information from the GNSS and a detection result of the attitude detector 6 may be combined with each other.

### LEGEND OF REFERENCE NUMERALS

- 1: Surveying instrument
- 2: Distance measuring module
- 3: Measuring direction image pickup module
- 4: Arithmetic control module
- 5: Storage module
- 6: Attitude detector
- 7: Measuring direction detector
- 8: Optical axis deflection motor driver
- 9: Optical axis deflector
- 10: Display module
- 15: Distance measuring optical axis
- 17: Disk prism
- 18: Disk prism

## Claims

1. A surveying instrument comprising a distance measuring module configured to project a distance measuring light on a distance measuring optical axis and to receive a reflected distance measuring light from an object and to perform a distance measurement, an optical axis deflector disposed on a reference optical axis of said distance measuring module and configured to deflect said distance measuring light with respect to said reference optical axis, an optical axis deflection motor driver configured to drive said optical axis deflector, an attitude detector, a measuring direction detector configured to detect a projection direction with respect to said reference optical axis of said distance measuring light, a storage module, and an arithmetic control module configured to control deflection of said distance measuring optical axis via said optical axis deflector, to perform a distance measurement by said distance measuring module and to synchronously control said distance measuring module, said attitude detector, and said optical axis deflector, wherein said optical axis deflector includes a pair of disk prisms composed of optical prisms and is configured to deflect said distance measuring optical axis by an individual rotation and a relative rotation of said pair of disk prisms, and said arithmetic control module is configured to drive said optical axis deflector via said optical axis deflection motor driver and to scan said distance measuring light in a predetermined scan pattern and to reversely rotate one of said disk prisms with respect to said other so as to suppress generation of Coriolis force.

2. The surveying instrument according to claim 1, wherein said arithmetic control module is configured to control driving of said optical axis deflector such that a product of a mass and an angular velocity of one disk prism is equal to or approximately equal to a product of a mass and an angular velocity of the other disk prism of said pair of disk prisms.

3. The surveying instrument according to claim 1, wherein said arithmetic control module is configured to control driving of said optical axis deflector such that a ratio of products of respective masses and respective rotation speeds of said respective two disk prisms is within a range of 0.7 to 1.5.

4. The surveying instrument according to any one of claims 1 to 3, further comprising said attitude detector configured to detect an attitude of said surveying instrument, wherein said arithmetic control module is configured to acquire three-dimensional point cloud data in a scan pattern of a horizontal reference based on a detection result of said attitude detector, a distance measurement result of said distance measuring module, and a detection result of said measuring direction detector.

5. The surveying instrument according to any one of claims 1 to 3, further comprising said attitude detector configured to detect an attitude of said surveying instrument, wherein said arithmetic control module is configured to acquire a three-dimensional measurement data of a horizontal reference of an object based on a detection result of said attitude detector, a distance measurement result of said distance measuring module, and a detection result of said measuring direction detector.
